# FASCICULE DE BREVET EUROPEEN

(11) **EP 3 464 132 B1**
(45) Date de publication et mention de la délivrance du brevet: **31.08.2022**
(21) Numéro de dépôt: 17732970.3
(22) Date de dépôt: 23.05.2017
(51) Int. Cl.: B65G 47/14

(54) **PROCEDE DE DEBLOCAGE DU DEFILEMENT DE CORPS CREUX DANS UN CONVOYEUR A GLISSIERE**
VERFAHREN ZUM ENTSPERREN DER BEWEGUNG VON HOHLKÖRPERN IN EINEM RUTSCHENFÖRDERER
METHOD FOR UNBLOCKING THE MOVEMENT OF HOLLOW BODIES IN A CHUTE CONVEYOR

(30) Priorité: 25.05.2016 FR 1654684
(43) Date de publication de la demande: 10.04.2019
(73) Titulaire: Sidel Participations, 76930 Octeville-sur-Mer (FR)
(72) Inventeur: DEBRIS, Anthony, 76930 Octeville-sur-mer (FR); MAZO, Eric, 76930 Octeville-sur-mer (FR)
(74) Mandataire: Sidel Group
(86) Numéro de dépôt international: PCT/FR2017/051275
(87) Numéro de publication internationale: WO 2017/203160

(56) Documents cités:
- EP-A1- 1 690 813
- EP-A1- 2 065 320
- EP-A1- 2 221 261
- EP-A1- 2 554 356
- WO-A1-2016/075389
- FR-A1- 2 767 517
- FR-A1- 2 772 359
- JP-A- 2014 076 618
- US-A1- 2011 108 468
- US-A1- 2015 041 282

## Description

### DOMAINE TECHNIQUE DE L'INVENTION

L'invention concerne un procédé de déblocage du défilement de préformes selon les revendications 1 et 2.

### ARRIERE PLAN TECHNIQUE DE L'INVENTION

L'invention s'applique à une installation de fabrication ou de traitement de récipients, tels que des bouteilles, par formage de préformes en matériau thermoplastique. Dans la suite de la description et dans les revendications, l'expression "corps creux" désignera indifféremment un récipient ou une préforme ou un récipient intermédiaire en cours de formage.

L'utilisation de convoyeurs à glissière est bien connue dans ce type d'installation. Ces convoyeurs sont destinés à faire transiter des corps creux en file pour les transporter jusqu'à un dispositif de transport suivant, par exemple une station de conditionnement thermique, une roue de transfert ou une station de traitement.

De manière connue, de tels convoyeurs comportent une glissière équipée d'une rainure longitudinale le long de laquelle les corps creux défilent les uns derrière les autres. Chaque corps creux, par exemple une préforme, comporte une collerette en saillie radiale qui est agencée à proximité du col du corps creux. Normalement, la collerette repose de part et d'autre de la rainure, notamment sur un rail fixe, tandis que le corps du corps creux pend librement sous l'effet de son poids à travers la rainure. Le corps creux est ainsi dans une position suspendue librement dans la glissière, correspondant à une position correcte.

Dans de tels convoyeurs, les corps creux ne sont pas maintenus les uns par rapport aux autres, de sorte que deux corps creux successifs sont par conséquent susceptibles de s'entrechoquer.

Le glissement des corps creux le long de la glissière est provoqué par des moyens d'entraînement. Les moyens d'entraînement peuvent être des moyens actifs, tels que des moyens motorisés, ou des moyens passifs, par exemple l'inclinaison de la glissière permettant de faire glisser les corps creux par gravité.

S'agissant d'installations de fabrication ou de traitement en grandes séries, de tels convoyeurs sont conçus pour faire transiter les corps creux avec un débit élevé. Pour garantir que chaque corps creux puisse être transféré automatiquement et de manière fluide au dispositif de transport suivant, il est préférable de s'assurer que tous les corps creux transportés par le convoyeur occupent leur position correcte (la position suspendue librement) avant d'atteindre un tronçon d'extrémité aval de la glissière. A cet effet, un organe complémentaire est généralement associé à la glissière soit pour trier les corps creux n'occupant pas leur position correcte soit pour maintenir dans leur position correcte les corps creux qui y sont déjà,

L'organe complémentaire peut être agencé selon deux configurations distinctes ou complémentaires.

Dans une première configuration, l'organe complémentaire est une pièce comprenant une face fixe, dite face de tri, qui a pour fonction de trier chaque corps creux occupant une position non correcte en bloquant son passage par contact d'une portion dudit corps creux contre la face de tri. Le corps creux occupe alors une position dite bloquante dans laquelle le corps creux est coincé contre la face de tri et peut, dans une certaine mesure, bloquer le défilement des corps creux suivants.

Dans une deuxième configuration, qui sera détaillée par la suite, l'organe complémentaire est une pièce, par exemple constituée d'un profilé suivant la glissière, comprenant une face fixe, dite face de maintien, qui a pour fonction de permettre que les corps creux occupant leur position correcte dans la glissière y demeurent tout au long de leur parcours dans le tronçon d'extrémité aval de la glissière. Lorsqu'ils sont correctement positionnés, les corps creux reposent sous l'effet de leur poids de part et d'autre de la rainure, sans qu'il n'y ait de contact entre une partie du corps creux et la face de maintien.

Cependant, il peut arriver que les corps creux soient animés d'un mouvement de balancement, généralement dans un plan longitudinal mais parfois dans un plan transversal. Ce mouvement de balancement peut être provoqué par les moyens d'entraînement des corps creux ou encore par entrechoquement entre des corps creux adjacents de la file. En cas de balancement trop important, une portion d'un corps creux est susceptible de venir en contact avec la face fixe, de maintien. Normalement, le corps creux revient sous l'effet de la gravité vers sa position suspendue librement. Cependant, dans certains cas, le corps creux vient se coincer contre la face fixe en s'inclinant. Il occupe alors une position bloquante dans laquelle son glissement est interrompu et dans laquelle il bloque le défilement des corps creux suivants qui s'accumulent alors contre ledit corps creux.

Dans tous les cas, un corps creux ainsi coincé et arrêté par une face fixe, qu'elle soit de tri ou de maintien, d'un organe complémentaire bloque le défilement des corps creux suivants qui s'accumulent les uns contre les autres derrière lui. Dans la suite de la description, un corps creux ainsi coincé et arrêté sera dénommé "corps creux bloquant".

Le corps creux, dès qu'il est coincé, subit une poussée en permanence contre la face fixe sous l'effet des moyens d'entraînement, laquelle poussée empêche ainsi ce corps creux bloquant de se décoincer seul sous l'effet de la gravité lorsque sa position le permettrait.

En outre, les corps creux accumulés derrière le corps creux bloquant exercent une poussée complémentaire sur celui-ci en direction de la face fixe sous l'effet des moyens d'entraînement. Ceci a pour effet de renforcer le coincement du corps creux bloquant contre la face fixe.

Pour remédier à ces situations, il est connu de recourir à l'intervention d'un opérateur qui se déplace pour décoincer manuellement le corps creux bloquant.

Cependant, une telle solution n'est pas suffisamment rapide pour une installation de fabrication en grandes séries.

En outre, une telle solution requiert la présence d'un opérateur dédié à cette tâche, qui survient de manière aléatoire et imprévisible.

On a aussi proposé d'équiper la glissière d'une trappe permettant d'éjecter automatiquement les corps creux bloquant lorsqu'une interruption du défilement des corps creux est détectée, par exemple au moyen d'un capteur optique. Une telle solution est fonctionnelle pour le cas de corps creux bloqués par une face de tri.

Cependant, une telle solution implique de récupérer le ou les corps creux qui sont éjectés de la glissière par la trappe. Ces corps creux peuvent ensuite être jetés au rebut ou recyclés en les réinjectant en amont dans le flux des corps creux. Dans les deux cas, une telle opération d'éjection implique des temps de transport et de récupération des corps creux éjectés.

Le document US2015/0041282 décrit un dispositif d'alimentation de produits tels que des flacons ou autres comprenant un bol rotatif. Les produits sont disposés contre un guide extérieur grâce la force centrifuge générée par la rotation du bol. Le fonctionnement de ce type de dispositif peut occasionner des blocages de produits. Dès lors, le dispositif est équipé des dispositifs de déblocage qui permet d'éviter des blocages et de remettre le dispositif en fonctionnement tel qu'une inversion de la rotation du bol, un jet d'air comprimé ou l'escamotage d'un guide.

De plus, une telle solution n'est pas applicable au cas d'un corps creux occupant sa position suspendue librement et se retrouvant ensuite coincé par balancement contre une face de maintien. Dans ce cas, le coincement du corps creux n'a pas forcément lieu au niveau d'une trappe d'éjection et il est alors nécessaire de recourir à l'intervention d'un opérateur. Les documents US2011/108468, EP2554356, EP2065320, JP2014076618, FR2772359 et EP1690813 décrivent un système de mise en lignes de préformes. Les documents WO2016/075389 et EP1690813 décrivent un convoyeur d'une ligne de préformes. Plus particulièrement WO 2016/075389 A1 divulgue un procédé de déblocage du défilement de préformes en matériau thermoplastique, se déplaçant en file dans un convoyeur pour installation de fabrications de bouteilles par formage desdites préformes selon le préambule de la revendication 1. En outre, EP 2221261 A1 divulgue un procédé de transport par défilement de préformes en matériau thermoplastique, se déplaçant en file dans un convoyeur pour installations de fabrication de bouteilles par formage desdites préformes, le procédé étant caractérisé en ce que ledit convoyeur comporte :- une glissière de guidage dans laquelle chaque préforme est destinée à occuper une position suspendue librement ; la glissière comportant deux rails fixes parallèles entre lesquels chaque préforme est reçue dans sa position suspendue librement;- des moyens d'entraînement en continu des préformes le long de la glissière dans un sens de défilement, lesdits moyens d'entraînement étant formés par une rampe de buses de soufflage de jets d'air comprimé sur les corps creux en direction du sens de déplacement, la rampe étant parallèle à la glissière;-un organe complémentaire associé à la glissière comprenant une face fixe constituée par une face de maintien garantissant que des préformes occupant déjà leur position suspendue librement dans la glissière demeureront dans cette position tout le long d'un tronçon d'extrémité aval de la glissière ;- une préforme étant susceptible d'occuper une position dans laquelle elle se retrouve coincée contre la face de maintien et d'être ainsi une première préforme coincée provoquant le blocage du défilement des préformes qui s'accumulent derrière la première préforme coincée.

De plus US 2011/108468 A1 divulgue un procédé de déblocage du défilement de préformes en matériau thermoplastique, se déplaçant en file dans un convoyeur pour installations de fabrication de bouteilles par formage desdites préformes, ledit convoyeur comportant : - une glissière de guidage dans laquelle chaque préforme est destinée à occuper une position suspendue librement; la glissière comportant deux rails fixes parallèles, entre lesquels chaque préforme est reçue dans sa position suspendue librement;- des moyens d'entraînement en continu des préformes le long de la glissière dans un sens de défilement, formés par des moyens passifs par le fait que la glissière et les rails qu'elle comporte sont inclinés pour permettre aux préformes de glisser vers le bas de la glissière sous l'effet de la gravité - un organe complémentaire associé à la glissière comprenant une face fixe constituée par une face de maintien garantissant que des préformes occupant déjà leur position suspendue librement dans la glissière demeureront dans cette position tout le long d'un tronçon d'extrémité aval de la glissière ; - une préforme étant susceptible d'occuper une position dans laquelle elle se retrouve coincée contre la face de maintien et d'être ainsi une première préforme coincée provoquant le blocage du défilement des préformes qui s'accumulent derrière la première préforme coincée.

### BREF RESUME DE L'INVENTION

L'invention propose deux procédés de déblocage du défilement de corps creux en matériau thermoplastique, se déplaçant en file dans un convoyeur respectivement selon les revendications 1 et 2.

Un tel procédé permet notamment d'éviter, pour une partie des cas de blocage, de recourir au déplacement d'un opérateur ou de procéder à l'éjection du corps creux. Le déblocage d'un corps creux bloquant selon le procédé de l'invention permet en effet de conserver le corps creux bloquant dans le flux des corps creux lorsque sa position bloquante le permet. L'impulsion peut être commandée à distance par l'opérateur sans qu'il ait besoin de se déplacer vers la partie de la machine où survient le problème. Comme on le lira plus loin, elle peut être provoquée automatiquement.

Selon d'autres aspects optionnels de l'invention
- le procédé comporte une étape préalable de détection du blocage du défilement des préformes, au moyen d'un capteur de passage des préformes, et l'impulsion de déblocage est provoquée automatiquement lorsqu'un blocage est détecté par le capteur.
la face de maintien est une face Z supérieure s'étendant au-dessus des cols des préformes.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de face qui représente une préforme ;
- la figure 2 est une vue en perspective qui représente schématiquement un dispositif d'alignement et de redressement de préformes comportant un convoyeur apte à mettre en oeuvre le procédé réalisé selon un premier mode de réalisation non couvert par l'invention ;
- la figure 3 est une vue de dessus qui représente un bol de centrifugeuse du dispositif de la figure 2 ;
- la figure 4 est une vue en coupe radiale selon la plan de coupe 4-4 de la figure 6 qui représente un secteur du bol de centrifugeuse de la figure 2 qui comporte une rainure délimitée par un rail fixe et par le plateau tournant du bol de centrifugeuse ainsi qu'une préforme alignée et redressée ;
- la figure 5 est une vue de dessus qui représente une préforme en cours de redressement dans la rainure de la glissière ;
- la figure 6 est une vue de dessus qui représente une préforme guidée dans la rainure dans un sens de défilement ;
- la figure 7 est une vue de dessus qui représente une partie aval de la glissière du dispositif de la figure 2 et qui comporte une roue démêleuse en train d'écarter une préforme occupant une position non correcte ;
- la figure 8 est une vue en coupe radiale du bol selon le plan de coupe 8-8 de la figure 7 qui représente la roue démêleuse de la figure 7 permettant le passage d'une préforme à col court occupant une position suspendue librement ;
- la figure 9 est une vue similaire à celle de la figure 8 qui représente la roue démêleuse de la figure 7 permettant le passage d'une préforme à col long occupant une position suspendue librement ;
- la figure 10 est une vue en coupe selon le plan de coupe 10-10 de la figure 11 qui représente la roue démêleuse de la figure 9 interdisant le passage d'une préforme à col long occupant une position couchée ;
- la figure 11 est une vue de dessus qui représente une préforme couchée qui est coincée par la roue démêleuse et qui bloque le défilement des préformes suivantes dans la glissière poussée par la rotation du plateau de la centrifugeuse dans un sens de défilement ;
- la figure 12 est une vue en coupe selon le plan de coupe 12-12 de la figure 11 ;
- la figure 13 est une vue similaire à celle de la figure 11 qui représente le plateau tournant dans un sens inverse au sens de défilement pour éloigner la préforme couchée de la roue démêleuse ;
- la figure 14 est une vue en coupe selon le plan de coupe 14-14 de la figure 13 qui représente la préforme couchée et la préforme suivante se déplaçant en sens inverse du sens de défilement pour s'écarter l'une de l'autre ;
- la figure 15 est une vue similaire à celle de la figure 14 qui représente la préforme couchée en cours de basculement vers sa position suspendue librement ;
- la figure 16 est une vue similaire à celle de la figure 14 dans laquelle la préforme couchée est désormais dans une position suspendue librement, le plateau tournant à nouveau dans le sens de défilement ;
- la figure 17 est une vue en coupe selon le plan de coupe 17-17 de la figure 19 qui représente une préforme agencée dans un convoyeur apte à mettre en oeuvre le procédé réalisé selon un deuxième mode de réalisation de l'invention ;
- la figure 18 est une vue en coupe selon le plan de coupe 18-18 de la figure 17 qui représente des bandes de brosses entraînant des préformes en déplacement dans un sens de défilement dans la glissière du convoyeur ;
- la figure 19 est une vue de côté qui représente deux préformes se déplaçant en file dans un sens de défilement dans la glissière du convoyeur de la figure 17 ;
- la figure 20 est une vue similaire à celle de la figure 19 qui représente une préforme dans une position bloquante dans laquelle elle est coincée contre une face de maintien et qui bloque le défilement des préformes suivantes, les bandes de brosses poussant les préformes dans le sens de défilement ;
- la figure 21 est une vue similaire à celle de la figure 20 dans laquelle les bandes de brosses se déplacent dans un sens inverse à celui du défilement pour écarter la préforme en position bloquante de la face de maintien et permettre son basculement vers une position suspendue librement ;
- la figure 22 est une vue de côté qui représente un convoyeur apte à mettre en oeuvre le procédé réalisé selon un troisième mode de réalisation de l'invention ;
- la figure 23 est une vue selon le plan de coupe 23-23 de la figure 22 qui représente une rampe de buses de soufflage poussant les préformes dans un sens opposé au sens de défilement.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif les orientations locales suivantes pour chaque corps creux :
- longitudinale "L" qui est dirigée horizontalement selon le sens de déplacement des corps creux ;
- verticale "V" dirigée de bas en haut selon le sens inverse de la gravité terrestre ;
- transversale "T" dirigée orthogonalement aux directions longitudinale "L" et verticale "T".

Les installations de fabrication de récipients par formage, par exemple par soufflage ou par étirage-soufflage, de préformes en matériau thermoplastique sont équipées de convoyeurs qui sont destinés à faire transiter des corps creux en file pour les transporter jusqu'à un dispositif de transport suivant, par exemple une roue de transfert ou une station de traitement.

De manière connue, certains types de convoyeurs comportent une glissière équipée d'une rainure longitudinale le long de laquelle les corps creux défilent les uns derrière les autres en glissant librement.

Chaque corps creux comporte un corps ouvert axialement par un col. Une face de support en saillie radiale est agencée à proximité du col du corps creux.

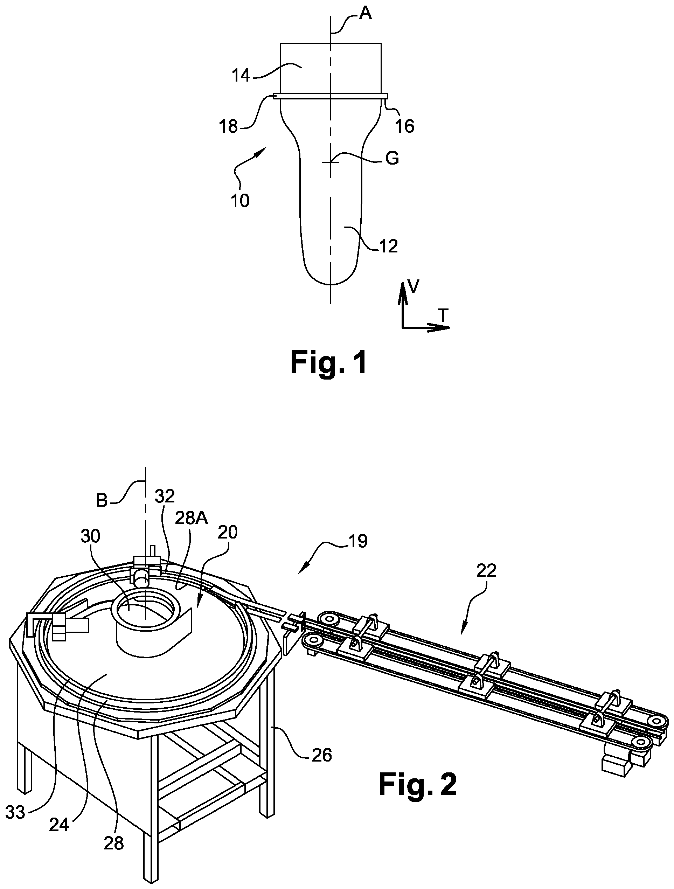

Un exemple de corps creux formé par une préforme 10 est illustré à la figure 1. Une telle préforme 10 est réalisée en matériau thermoplastique, ici en PET. Il est classiquement obtenu par moulage par injection. Il présente une forme sensiblement axisymétrique autour d'un axe "A" principal représenté verticalement à la figure 1.

La préforme 10 comporte un corps 12 en forme de tube allongé selon l'axe "A" principal présentant une extrémité axiale fermée et présentant à son extrémité opposée, représentée en haut à la figure 1, un col 14 ouvert axialement.

La préforme 10 comporte aussi une face 16 annulaire de support qui est orientée axialement vers l'extrémité fermée de la préforme 10, et qui fait saillie radialement par rapport au reste du corps 12. Le terme "annulaire" signifie que la face 16 de support fait le tour de la préforme 10 soit de manière continue, soit de manière discontinue. Dans ce dernier cas, la face 16 annulaire est par exemple formée de segments disjoints qui sont néanmoins suffisamment rapprochés pour que la préforme 10 puisse être soutenue entre deux supports diamétralement opposés quelle que soit la position de la préforme 10 autour de son axe principal.

Dans l'exemple représenté, la base du col 14, à la jonction avec le corps 12, présente une collerette 18 qui s'étend radialement en saillie par rapport au reste de la préforme 10. La face 16 inférieure de la collerette 18 forme ainsi ladite face 16 de support. La collerette 18 est ici réalisée venue de matière avec le col 14 et le corps 12.

En variante, la collerette peut être agencée ailleurs qu'à la base du col 14, par exemple au niveau du buvant.

Selon une autre variante, la face 16 de support est par exemple formée par une face inférieure d'un filetage du col 14.

Selon encore une autre variante, la face de support est rapportée sur le corps creux, par exemple par l'intermédiaire d'un bouchon.

En outre, le centre "G" de gravité de la préforme 10 est situé sous la face 16 de support en référence à la figure 1. Ainsi, une préforme 10 soutenue par sa face 16 de support en reposant sur deux supports diamétralement opposés s'orientera naturellement, par gravité, col 14 en haut.

L'exemple représenté à la figure 1 est non limitatif. On comprendra que le dispositif et le procédé associé sont destinés à être appliqués à tout type de corps creux présentant une face 16 de support faisant saillie radialement par rapport au reste du corps 12, et présentant un centre "G" de gravité décalé axialement vers le corps par rapport à ladite face 16 de support.

On définit une position suspendue librement du corps creux dans la glissière dans laquelle la collerette 18 repose par sa face 16 de support de part et d'autre de la rainure, tandis que le corps du corps creux pend librement sous l'effet de son poids à travers la rainure.

Le glissement des corps creux le long de la glissière est provoqué par des moyens d'entraînement. Comme cela sera expliqué plus en détails par la suite, les moyens d'entraînement sont soit des moyens actifs, tels que des moyens motorisés, soit des moyens passifs du fait de l'inclinaison de la glissière permettant de faire glisser les corps creux par gravité.

En variante, la glissière est délimitée par deux bandes roulantes synchronisées qui transportent le corps creux.

Pour garantir que chaque corps creux puisse être transféré automatiquement et de manière fluide au dispositif de transport suivant, il est préférable de s'assurer que tous les corps creux transportés par le convoyeur conservent leur position suspendue librement avant d'atteindre un tronçon d'extrémité aval de la glissière. A cet effet, de façon connue, un organe complémentaire comprenant au moins une face fixe est associé à la glissière.

Dans une première configuration, qui sera décrite en détails dans le premier mode de réalisation non couvert par l'invention, la face fixe de l'organe complémentaire est une face de tri qui a pour fonction de bloquer le passage des corps creux occupant une position non correcte par contact d'une portion dudit corps creux contre la face de tri et l'empêcher de parvenir à l'extrémité aval de la glissière. Le corps creux occupe alors une position dite bloquante dans laquelle le corps creux est coincé contre la face de tri et dans laquelle il bloque le défilement des corps creux suivants.

Dans une deuxième configuration, qui sera détaillée dans les deuxième et dans le troisième modes réalisation selon l'invention, la face fixe de l'organe complémentaire est une face de maintien qui a pour fonction de garantir que les corps creux occupant déjà leur position suspendue librement dans la glissière demeureront dans cette position tout le long du tronçon d'extrémité aval de la glissière. Il peut en effet arriver qu'un corps creux soit animé d'un mouvement de balancement, généralement dans un plan longitudinal vertical. Ce balancement est provoqué par exemple par les moyens d'entrainement ou encore par entrechoquement avec un corps adjacent de la file. La face de maintien permet d'éviter que le corps creux ne sorte de la glissière en cas de balancement trop ample du corps creux par contact d'une portion du corps creux avec la face de maintien. Néanmoins, dans certain cas, le corps creux se retrouve coincé contre la face de maintien dans une position bloquante pour les corps creux suivants de la file et devient un corps creux bloquant.

Dans ces deux configurations, un corps creux ainsi arrêté par la face fixe bloque le défilement des corps creux suivants qui s'accumulent les uns contre les autres derrière ce corps creux arrêté par la face fixe.

Le corps creux bloquant est poussé en permanence contre la face fixe sous l'effet des moyens d'entraînement, ce qui l'empêche ainsi de se décoincer seul sous l'effet de la gravité lorsque sa position le permettrait.

En outre, les corps creux accumulés derrière le corps creux bloquant exercent une poussée complémentaire sur celui-ci en direction de la face fixe sous l'effet des moyens d'entraînement. Ceci a pour effet de renforcer le coincement du corps creux contre la face fixe.

Pour remédier à ce problème sans éjecter le corps creux de la file et sans faire intervenir un opérateur pour agir manuellement directement sur le corps creux bloquant, l'invention propose un procédé de déblocage du défilement des corps creux qui comporte une étape de déblocage qui consiste à appliquer aux corps creux de la file bloquée une impulsion à l'encontre du sens de défilement, afin d'écarter la portion coincée du corps creux bloquant par rapport à la face fixe et ainsi permettre au corps creux bloquant de retrouver naturellement sous l'effet de la gravité sa position suspendue librement dans la glissière.

En outre, cette impulsion à contresens permet aussi d'écarter les corps creux de la file les uns des autres, favorisant le retour du corps creux bloquant vers sa position suspendue librement sans être gêné par les corps creux suivants.

Selon un premier mode de réalisation non couvert par l'invention, il est représenté aux figures 2 à 6 un convoyeur 19 formant un dispositif pour aligner en une file et redresser des préformes 10, lequel convoyeur 19 est destiné à faire partie d'une installation (non représentée) de fabrication et/ou de traitement de récipients en matériau thermoplastique par formage, notamment par soufflage ou par étirage-soufflage.

Le convoyeur 19 comporte principalement un bol 20 de centrifugeuse. Un dispositif 22 de transport suivant est agencé en sortie du bol 20 pour transporter les préformes 10 alignées et redressées en position suspendue librement.

Le bol 20 de centrifugeuse comporte un plateau 24 circulaire horizontal tournant autour d'un axe "B" vertical central. Le plateau 24 tournant présente ainsi un bord 25 périphérique circulaire. La face supérieure du plateau 24 tournant délimite, verticalement vers le bas, l'intérieur du bol 20 de centrifugeuse. Ainsi, le plateau 24 forme le fond du bol 20.

Le plateau 24 tournant est entraîné en rotation, de préférence à régime constant, dans un sens de déplacement, ici un sens horaire indiqué par la flèche "F1" des figures, par exemple par un moteur (non représenté) qui est agencé sous le plateau 24 tournant. La vitesse de rotation est par exemple commandée de manière que le bord 25 périphérique du plateau 24 tournant se déplace entre 2 et 3 m/s.

Dans l'exemple illustré, le plateau 24 tournant est porté par une table 26 de support. Le bol 20 de centrifugeuse est délimité radialement vers l'extérieur par une rambarde 28 périphérique fixe qui est ici fixée à la table 26 de support. Cette rambarde 28 a notamment pour première fonction de retenir les préformes 10 projetées vers l'extérieur par la force centrifuge produite par la rotation du plateau 24 tournant, et pour deuxième fonction de guider le déplacement des préformes 10 jusqu'à un passage 32 de sortie du bol 20 vers le dispositif 22 de transport suivant.

Les préformes 10 sont déversées en vrac sur le plateau 24 tournant par l'intermédiaire d'un déversoir 30 fixe. Le déversoir 30 est ici agencé au centre du plateau 24 tournant. Le déversoir 30 est conçu pour déverser les préformes 10 en vrac, radialement en direction d'une première portion 28A de réception de la rambarde 28 dans un premier secteur 20A angulaire du bol 20.

Au cours du fonctionnement du convoyeur 19, lors d'une première phase, dite de déversement, les préformes 10 déversées en vrac par le déversoir 30 sont projetées radialement contre la portion 28A de réception de la rambarde 28 sous l'effet conjugué de leur vitesse radiale de glissement en sortie du déversoir 30 et de la force centrifuge produite par la rotation du plateau 24 tournant. Les préformes 10 sont constamment maintenues radialement contre la rambarde 28 par la force centrifuge.

Puis, lors d'une seconde phase, les préformes 10 sont entraînées en déplacement purement tangentiel dans le sens de la flèche "F1" par le plateau 24 tournant le long de la rambarde 28.

Ainsi, la plupart des préformes 10 se retrouvent alignées tangentiellement contre la rambarde 28, avec leur axe "A" principal orienté sensiblement tangentiellement à leur direction de déplacement. L'écart entre deux préformes 10 alignées successives est aléatoire car le plateau 24 tournant est parfaitement plan et ne présente pas de crans d'indexation des préformes 10. Les préformes 10 peuvent ainsi être en contact par leurs extrémités sous l'effet de la force centrifuge qui oblige les préformes 10 à glisser les unes par rapport aux autres.

A ce stade, les préformes 10 sont orientées aléatoirement col 14 vers l'amont ou vers l'aval sans incidence pour la suite du procédé.

Le bol 20 comporte un secteur 20B angulaire de convoyage dans lequel les préformes 10 ainsi alignées sont redressées dans une position suspendue librement puis convoyées en file dans cette position jusqu'au dispositif de transport suivant. A l'extrémité aval de ce secteur 20B angulaire de convoyage, le passage 32 de sortie des préformes 10 est ouvert dans la rambarde 28 pour permettre de guider les préformes 10 correctement alignées et redressées en position suspendue librement vers le dispositif 22 de transport suivant.

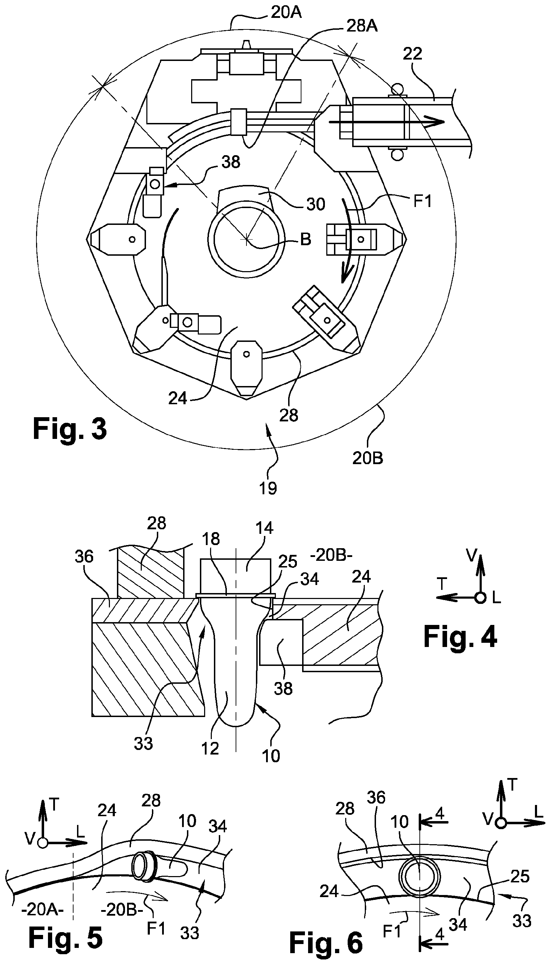

Comme représenté à la figure 4, le secteur 20B angulaire de convoyage comporte une glissière 33 qui est équipée d'une rainure 34 périphérique formée par écartement radial de la rambarde 28 par rapport au bord 25 périphérique du plateau 24 tournant.

Tout le long du secteur 20B angulaire de convoyage, la rambarde 28 présente un rail 36 fixe de support de la face 16 de support. Le rail 36 s'étend en saillie radialement vers l'intérieur au même niveau que la face supérieure du plateau 24 tournant.

La rainure 34 est ainsi délimitée transversalement entre le rail 36 fixe de la rambarde et le bord 25 périphérique mobile du plateau 24. Cette rainure 34 se prolonge jusqu'au passage 32 de sortie des préformes 10.

Comme illustré à la figure 4, les préformes 10 sont susceptibles d'être soutenues par leur face 16 de support, constituée dans le cas présent parleur collerette 18 qui repose alors, en deux points diamétralement opposés, sur la face supérieure horizontale du plateau 24 tournant, d'une part, et sur une face supérieure horizontale du rail 36, d'autre part, le corps 12 des préformes 10 étant sous le niveau du plateau 24 tournant à travers la rainure 34. Les deux points d'appui sont alignés diamétralement, donc transversalement.

S'ensuit une troisième phase, dite de redressement, non représentée, à laquelle les préformes 10 alignées lors de la deuxième phase arrivent couchées en étant alignées en une file le long de la rambarde 28, leur axe "A" principal orienté tangentiellement.

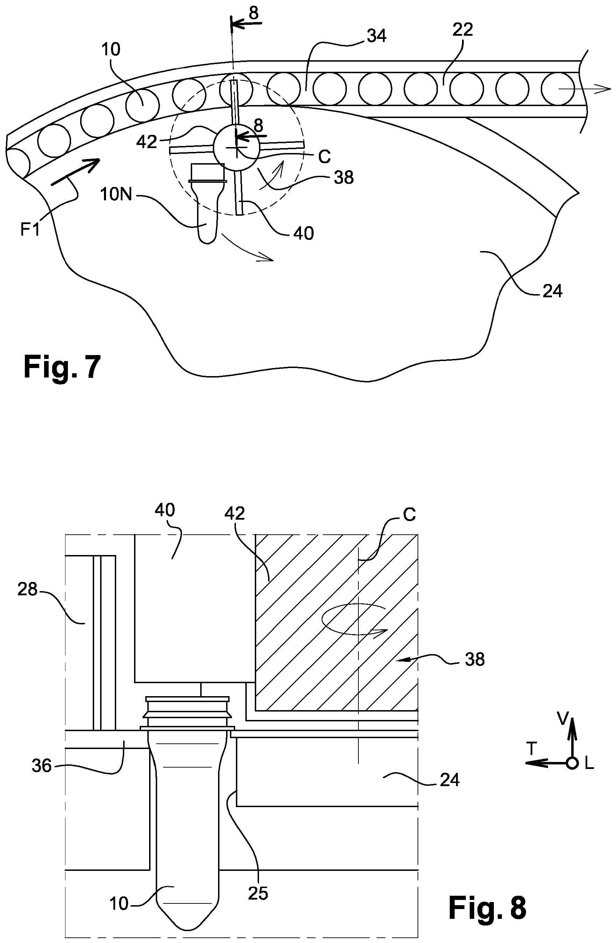

En référence aux figures 5 et 6, lorsque le corps 12 de chaque préforme 10 arrive au-dessus de la rainure 34, le corps 12 commence à tomber, faisant ainsi basculer la préforme 10 autour d'un axe radial passant par les points d'appui de la face 16 de support, dans le cas présent la collerette 18, de la préforme 10. Le basculement se poursuit jusqu'à ce que l'axe "A" principal de la préforme 10 soit vertical, éventuellement après quelques balancement autour de l'axe radial. La préforme 10 est alors soutenue par sa face 16 de support reposant conjointement sur le rail 36 et sur le plateau 24 tournant, comme indiqué à la figure 7. La préforme 10 est ainsi redressée, col 14 en haut. Une préforme 10 ainsi redressée est guidée extérieurement par le rail 36 de la rambarde 28, et elle est guidée intérieurement par le bord 25 périphérique du plateau 24 tournant.

Les préformes 10 ainsi redressées occupent normalement une position suspendue librement, c'est-à-dire une position correcte, dans laquelle elles sont aptes à être transférées au dispositif 22 de transport suivant. Elles sont entraînées en rotation autour de leur axe principal par frottement contre le bord 25 périphérique du plateau 24 en glissant sur le rail. Les préformes 10 sont ainsi déplacées autour du bol 20 dans le sens "F1" de rotation du plateau 24 tournant par roulement contre la rambarde 28 périphérique.

Néanmoins, il arrive que certaines préformes 10 occupent une position incorrecte. Par exemple, certaines préformes 10N sont emboîtées l'une dans l'autre et défilent avec les préformes 10 suspendues librement ou, encore, des préformes 10N sont couchées sur les cols 14 de préformes 10 suspendues librement. Les préformes 10N occupent des positions incorrectes telles qu'il est impossible de les repositionner correctement de manière rapide et automatique.

Il arrive aussi que des préformes 10 occupent une position couchée au-dessus de la rainure 34 à la même hauteur que les cols 14 des préformes 10 suspendues librement. Ces dernières préformes 10 couchées sont généralement empêchées de basculer vers leur position suspendue librement en raison de la présence des préformes 10 adjacentes.

Les préformes 10 en position suspendue librement sont ainsi acheminées en file vers un tronçon d'extrémité aval de la glissière 33 à l'entrée duquel les préformes 10N occupant une position non correcte sont réexpédiées directement vers le centre du bol par des moyens de triage tels qu'une roue 38 démêleuse.

Les moyens de triage permettent d'éjecter activement des préformes 10N occupant une position non correcte vers le centre du bol pour permettre leur retour direct dans le flux des préformes 10 arrivant en vrac par le déversoir 30. L'adverbe "activement" signifie que les moyens de triage sont aptes à fournir aux préformes 10N occupant une position non correcte une impulsion telle qu'elles retournent rapidement vers le centre du bol.

Les moyens de triage comportent en particulier une roue 38 à palettes 40, dite roue 38 démêleuse qui est agencée en amont du passage 32 de sortie selon le sens "F1" de rotation du plateau 24 tournant. Dans le mode de réalisation représenté à la figure 7, la roue 38 démêleuse est plus particulièrement agencée directement en amont du passage 32 de sortie, de manière que les préformes 10N éjectées soient projetées directement contre la portion 28A de réception de la rambarde 28 sans risquer d'atteindre le passage 32 de sortie.

La roue 38 démêleuse comporte un fût 42 central depuis lequel les palettes 40 s'étendent radialement. La roue 38 démêleuse tourne ici autour d'un axe vertical "C". L'espace balayé par les palettes 40 est ainsi cylindrique d'axe "C". Cet espace balayé est représenté en traits interrompus à la figure 7.

Chaque palette 40 balaie un espace qui s'étend verticalement au-dessus de la rainure 34 à une distance verticale légèrement supérieure à la hauteur d'un col 14 de préforme 10 (la hauteur étant déterminée entre la collerette ou l'ouverture, ou buvant de la préforme). Ainsi, chaque palette 40 est disposée pour passer verticalement au-dessus et à proximité du col 14 des préformes 10 en position suspendue librement, mais en regard du col 14 d'une éventuelle préforme 10N emboîtée dans une autre ou en regard d'une préforme 10N reposant couchée sur des préformes suspendues librement. Ainsi, une palette 40 peut venir au contact des préformes 10N emboîtées ou couchées, donc incorrectement positionnées.

Ceci permet non seulement d'éjecter les préformes 10N mal positionnées, mais encore de garantir que ces préformes 10N seront éjectées sans possibilité de passer sous les palettes 40. Ceci permet aussi d'éviter que les préformes 10N éjectées ne reviennent en direction du passage 32 de sortie.

Le fût 42 de la roue est agencé transversalement à une distance transversale du bord 25 périphérique du plateau 24 permettant le passage de la collerette 18 d'une préforme 10 suspendue librement.

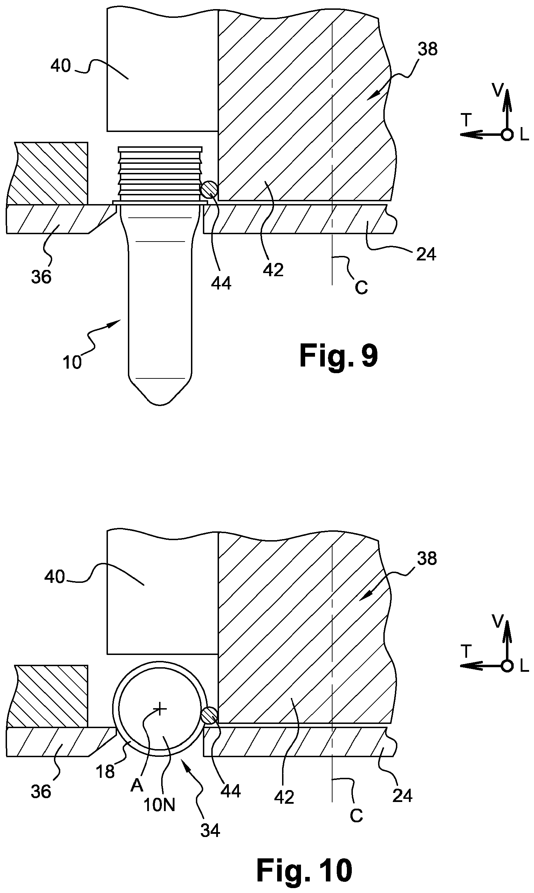

Comme représenté à la figure 9, certaines préformes 10 dites "à col 14 long" présentent un col 14 dont la hauteur, telle que définie précédemment, est supérieure au diamètre de leur collerette 18. Pour pouvoir interdire le passage de telles préformes 10 qui occuperaient une position couchée, il est prévu d'agencer un anneau formant une face 44 saillant radialement autour du fût 42 de la roue 38 démêleuse, sous les palettes 40. Cet anneau formant la face 44 est par exemple formé par un joint torique réalisé en matériau élastomère.

Une telle face 44 formée par l'anneau permet de restreindre la section de passage laissée par le fût 42 pour les cols 14, tout en laissant passer les préformes 10 suspendues librement dont la collerette 18 passe entre le plateau 24 et la face 44 de l'anneau (Fig. 9). Les préformes 10 occupant une position incorrecte sont coincées par contact de leur collerette 18 avec la face 44 de l'anneau (Fig. 10). La face externe de l'anneau forme ainsi une face 44 fixe, de tri.

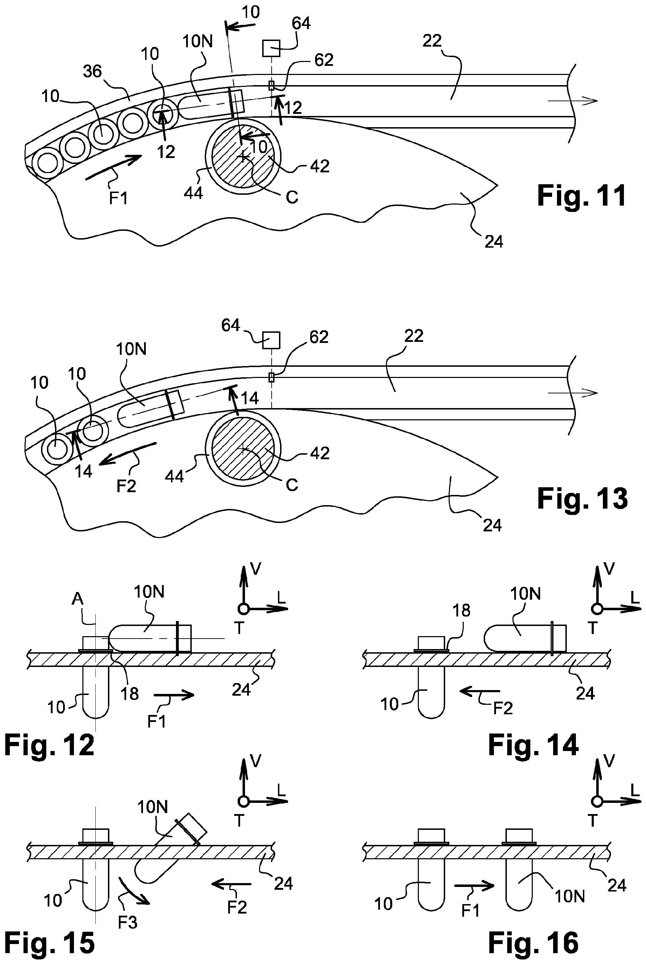

Si la plupart des préformes 10 occupant une position incorrecte sont éjectées vers le centre du bol par les palettes 40 de la roue démêleuse, certaines préformes 10N occupant une position bloquante restent toutefois coincées contre la face 44 de l'anneau. Ces préformes 10N en position bloquante qui sont arrêtées par la face 44 de l'anneau bloquent le défilement des préformes 10 suivantes, comme cela est représenté à la figure 11. La préforme 10N en position bloquante est par exemple maintenue dans sa position couchée par appui de son extrémité fermée sur la collerette 18 de la préforme 10 suivante, comme illustré à la figure 12.

L'invention propose d'appliquer une impulsion aux préformes 10 de la file bloquée allant à l'encontre du sens "F1" de déplacement normal. Cette impulsion est produite par une brève inversion du sens de rotation du plateau tournant, comme représenté par la flèche "F2" de la figure 13. Ainsi, lorsqu'un corps creux est coincé contre la face de tri, la rotation du plateau est brièvement inversée, afin de permettre à la préforme 10N en position bloquante d'être écartée de la face 44 de tri, ici de l'anneau, en reculant le long de la glissière 33.

Cette inversion de sens de rotation du plateau 24 provoque aussi le recul le long de la glissière 33 des préformes 10 accumulées derrière la préforme 10N. Ainsi, cette préforme 10N est aussi écartée longitudinalement de la préforme 10 adjacente suivante. La préforme 10N n'est donc plus bloquée dans sa position couchée par la collerette 18 de la préforme 10 adjacente. Comme représenté à la figure 15, la préforme 10N est alors libre de basculer automatiquement vers sa position suspendue librement sous l'effet de la gravité, comme indiqué par la flèche "F3".

On a constaté qu'un bref retour en arrière des corps creux, par exemple pendant quelques secondes ou fractions de secondes, suffisait à permettre à un corps creux occupant sa position bloquante de basculer automatiquement vers sa position suspendue librement sous l'effet de son poids lorsque sa position le permet.

Comme représenté à la figure 16, la rotation du plateau 24 est à nouveau commandée dans son sens "F1" normal. La préforme 10N étant à présent dans une position suspendue librement, elle passe à travers le passage laissé libre par la roue 38 démêleuse en direction du dispositif 22 de transport suivant.

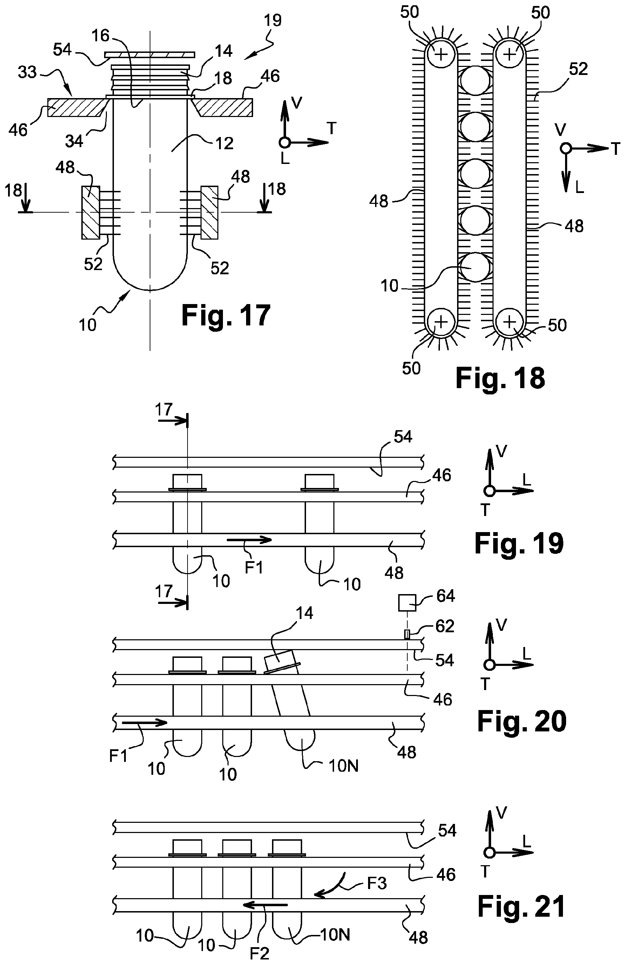

Selon un deuxième mode de réalisation de l'invention qui est représenté aux figures 17 à 21, le convoyeur 19 est formé par une glissière 33 comportant deux rails 46 fixes parallèles entre lesquels les corps creux, ici des préformes 10, sont reçus dans leur position suspendue librement. Les deux rails 46 sont ici agencés dans un plan horizontal.

Les rails 46 délimitent ainsi transversalement une rainure 34. Le corps 12 de chaque préforme 10 est agencé sous les rails 46 tandis que le col 14 est agencé au-dessus des rails 46. La préforme 10 repose librement par sa face 16 de support sur chaque rail 46 de part et d'autre de la rainure 34, comme représenté à la figure 17.

Les moyens d'entraînement sont ici inversibles, c'est-à-dire qu'on peut les commander de manière à inverser le sens de déplacement des préformes 10 dans la glissière 33.

Dans l'exemple représenté aux figures 17 et 18, les moyens d'entraînement sont ici formés par au moins une bande 48 de brosses se déplaçant parallèlement à la glissière 33. Cette bande 48 de brosses est agencée sous les rails 46 à la hauteur du corps 12 des préformes 10. La bande 48 de brosses est ici agencée en boucle fermée de manière qu'un brin d'entraînement de la bande 48 de brosses soit agencé à proximité des corps 12 des préformes 10. La bande 48 de brosses est tendue autour de deux pignons 50 rotatifs autour d'un axe vertical. L'un des pignons 50 est moteur de manière à entraîner la bande 48 de brosses.

La bande 48 de brosses comporte des poils 52 souples du brin d'entraînement s'étendant transversalement de manière à s'étendre en travers de la trajectoire des corps 12 des préformes 10, comme illustré à la figure 17. Les corps 12 des préformes 10 sont ainsi pris entre les poils 52 souples des bandes 48 de brosses. Lorsque la bande 48 de brosses est entraînée par le pignon 50 moteur, les poils 52 poussent les préformes 10 en direction du sens "F1" de défilement. La souplesse des poils 52 permet d'éviter d'endommager le corps 12 des préformes 10.

La glissière 33 est équipée, au moins sur un tronçon d'extrémité aval, d'une face 54 de maintien, horizontale, qui s'étend au-dessus des cols 14 des préformes 10 parallèlement à la rainure 34. La distance entre le dessus des cols et la face 54 de maintien est suffisamment faible pour limiter l'amplitude de balancement des préformes 10 par contact avec un bord d'extrémité, dit buvant, des cols 14, comme illustré aux figures 17 et 19. La face 54 de maintien est fixe par rapport aux rails 46. La face 54 de maintien forme ainsi un plafond qui empêche les préformes 10 de sortir de la glissière 33.

Il arrive qu'en situation de balancement trop important d'une préforme 10, le bord d'extrémité libre de son col 14 (son buvant) se retrouve au contact de la face 54 de maintien, comme cela est illustré à la figure 20. Dans la plupart des cas, le col 14 rebondit contre la face 54 de maintien et la préforme 10 revient vers sa position suspendue librement.

Cependant, dans certains cas, le col 14 demeure coincé contre la face 54 de maintien. Les préformes 10 sont alors bloquées, tandis que la bande 48 de brosses continue à tourner, les poils 52 des brosses fléchissant en brossant les corps 12 immobilisés. Le col 14 de la préforme 10 est maintenu coincé contre la face 54 de maintien sous l'effet de la poussée permanente des poils 52 de brosses qui tendent à faire pivoter la préforme 10 autour de ses points d'appui sur les rails 46. Cet effet de coincement est ensuite renforcé par la poussée permanente des préformes 10 accumulées derrière cette préforme 10 bloquée.

On a constaté qu'en inversant brièvement le sens de déplacement des bandes 48 de brosses, comme indiqué par la flèche "F2" de la figure 21, durant une étape de déblocage, les poils 52 de brosses appliquent un effort de basculement sur la préforme 10 qui tend ainsi à s'écarter de la face 54 de maintien, comme indiqué par la flèche "F3" de la figure 21, la cause du blocage étant ainsi éliminée. Le col 14 est ainsi libre de pivoter vers sa position suspendue librement.

En outre, les préformes 10 accumulées derrière la préforme 10 bloquée sont écartées en arrière par rapport à la préforme 10 bloquée pour lui permettre de basculer librement.

Après cette brève inversion, par exemple de l'ordre de la seconde, le déplacement des bandes 48 de brosses est à nouveau commandé dans le sens "F1" normal de déplacement pour permettre aux préformes 10 de poursuivre normalement leur glissement vers l'aval dans la glissière 33.

Au lieu de bandes 48 de brosses, on pourrait utiliser des bandes avec un coefficient de frottement suffisamment faible pour ne pas marquer les préformes, mais suffisamment élevé pour entraîner les préformes dans un sens ou dans l'autre selon les besoins.

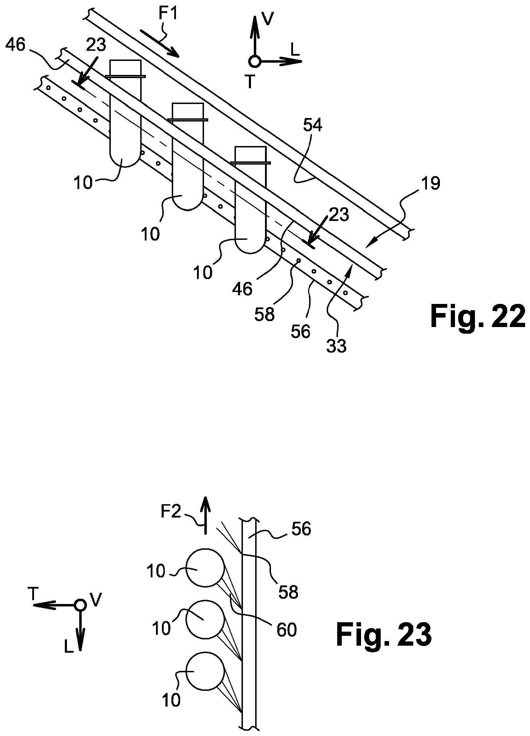

Selon un troisième mode de réalisation de l'invention qui est représenté aux figures 22 et 23, le convoyeur 19 est formé par une glissière 33 comportant deux rails 46 fixes parallèles entre lesquels chaque corps creux est reçu. La glissière 33 est ainsi réalisée de manière similaire à celle du deuxième mode de réalisation.

Cependant, dans ce mode de réalisation, les moyens d'entraînement des préformes 10 ne sont pas inversibles.

Ainsi, dans l'exemple représenté à la figure 22, les rails sont inclinés pour permettre aux corps creux de glisser vers le bas de la glissière 33 sous l'effet de la gravité.

Selon une variante non représentée de l'invention, les rails sont horizontaux et les moyens de déplacement sont formés par une rampe de buses de soufflage de jets d'air comprimé sur les corps creux en direction du sens de déplacement, la rampe étant parallèle à la glissière.

Selon ce mode de réalisation, le convoyeur 19 comporte des moyens d'entraînement dédiés pour inverser le sens de déplacement des préformes 10.

Dans l'exemple représenté aux figures 22 et 23, l'impulsion de déblocage est réalisée par soufflage de jets d'air comprimé sur une partie des corps creux à l'encontre du sens de défilement des corps creux. A cet effet, une rampe 56 de buses 58 de soufflage est agencée parallèlement à la glissière 33. Les buses sont aptes à souffler un jet 60 dirigé vers le corps 12 de la préforme 10. Le jet 60 est plus particulièrement incliné vers l'arrière afin d'agir de manière similaire aux brosses du deuxième mode de réalisation lors de l'étape de déblocage, comme cela est indiqué à la figure 23.

Ainsi, lors de l'étape de déblocage, la rampe 56 est commandée de manière à émettre des jets 60 pour faire reculer le corps des préformes vers l'amont dans la glissière 33. De manière similaire à ce qui a été décrit pour le deuxième mode de réalisation, une préforme 10N bloquée est ainsi libre de revenir vers sa position suspendue librement.

Dans tous les modes de réalisation décrits précédemment, le procédé comporte avantageusement une étape préalable de détection automatique du blocage du défilement des préformes 10, au moyen d'un capteur 62 de passage des préformes 10, comme illustré aux figures 1, 13 et 20 en application au premier et au deuxième mode de réalisation de l'invention. Le capteur 62 est relié avec une unité 64 électronique de commande qui est apte à commander automatiquement le déclenchement d'une étape de déblocage lorsqu'une interruption du défilement des préformes 10 est détectée.

Il s'agit par exemple d'un capteur 62 optique qui émet transversalement un rayon en travers du passage des préformes 10. Lorsqu'aucune préforme 10 ne coupe le rayon pendant une durée prédéterminée, ceci est interprété par l'unité 64 électronique de commande comme la détection d'une préforme 10N bloquée.

L'unité 64 électronique de commande enclenche alors automatiquement l'étape de déblocage. Un déclenchement automatique de l'étape de déblocage évite à un opérateur d'intervenir, même à distance, pour piloter l'impulsion.

Toutefois, lorsque le défilement des corps creux demeure bloqué à l'issue de l'étape de déblocage, une étape d'éjection du corps creux bloquant est déclenchée ou un avertissement est émis à destination d'un opérateur pour réaliser une opération manuelle de déblocage.

Le procédé de déblocage automatique réalisé selon les enseignements de l'invention permet ainsi de diminuer la durée de blocage des corps creux tout en conservant la plupart des corps creux dans leur file.

Le procédé a été décrit en application à des préformes. On comprendra qu'il est aussi applicable à d'autres types de corps creux, tels que des récipients.

## Revendications

1. Procédé de déblocage du défilement de préformes (10) en matériau thermoplastique, se déplaçant en file dans un convoyeur (19) pour installations de fabrication de bouteilles par formage desdites préformes, edit convoyeur comportant
- une glissière (33) de guidage dans laquelle chaque préforme est destinée à occuper une position suspendue librement; la glissière (33) comportant deux rails (46) fixes parallèles entre lesquels chaque préforme est reçue dans sa position suspendue librement;
- des moyens d'entraînement en continu des préformes le long de la glissière (33) dans un sens de défilement, lesdits moyens d'entraînement étant formés par au moins une bande (48) de brosses se déplaçant parallèlement à la glissière (33) dont les poils (52) poussent les préformes en direction du sens (F1) de défilement ;
- un organe complémentaire associé à la glissière comprenant une face fixe constituée par une face (54) de maintien garantissant que des préformes occupant déjà leur position suspendue librement dans la glissière demeureront dans cette position tout le long d'un tronçon d'extrémité aval de la glissière ;
- une préforme étant susceptible d'occuper une position dans laquelle elle se retrouve coincée contre la face de maintien (54) et d'être ainsi une première préforme coincée provoquant le blocage du défilement des préformes qui s'accumulent derrière la première préforme coincée;
caractérisé Z et- en ce que le procédé comporte une étape de déblocage qui consiste à appliquer aux préformes de la file bloquée une impulsion de déblocage réalisée par inversion du sens de déplacement des bandes (48) de brosses pour écarter la première préforme coincée par rapport à la face (54) fixe et permettre à ladite première préforme coincée de basculer jusqu'à sa position suspendue librement dans la glissière (33).

2. Procédé de déblocage du défilement de préformes (10) en matériau thermoplastique, se déplaçant en file dans un convoyeur (19) pour installations de fabrication de bouteilles par formage desdites préformes, edit convoyeur comportant
- une glissière (33) de guidage dans laquelle chaque préforme est destinée à occuper une position suspendue librement ; la glissière (33) comportant deux rails (46) fixes parallèles entre lesquels chaque préforme est reçue dans sa position suspendue librement;
- des moyens d'entraînement en continu des préformes le long de la glissière (33) dans un sens de défilement, lesdits moyens d'entraînement étant formés :
soit par des moyens passifs par le fait que la glissière et les rails (46) qu'elle comporte sont inclinés pour permettre aux préformes de glisser vers le bas de la glissière (33) sous l'effet de la gravité soit par une deuxième rampe de buses de soufflage de jets d'air comprimé sur les préformes en direction du sens de déplacement, la rampe étant parallèle à la glissière;
- un organe complémentaire associé à la glissière comprenant une face fixe constituée par une face (54) de maintien garantissant que des préformes occupant déjà leur position suspendue librement dans la glissière demeureront dans cette position tout le long d'un tronçon d'extrémité aval de la glissière ;
- une préforme étant susceptible d'occuper une position dans laquelle elle se retrouve coincée contre la face de maintien (54) et d'être ainsi une première préforme coincée provoquant le blocage du défilement des préformes qui s'accumulent derrière la première préforme coincée;
et où le procédé comporte une étape de déblocage qui consiste à appliquer aux préformes de la file bloquée une impulsion de déblocage réalisée par soufflage de jets (60) d'air comprimé sur une partie des préformes à l'encontre du sens (F1) de défilement des préformes au moyen d'une première rampe (56) de buses de soufflage parallèle à la glissière (33), pour permettre à ladite première préforme coincée de basculer jusqu'à sa position suspendue librement dans la glissière (33).

3. Procédé selon l'une des revendications 1 ou 2, **caractérisé en ce qu'**il comporte une étape préalable de détection du blocage du défilement des préformes, au moyen d'un capteur (62) de passage des préformes, et **en ce que** l'impulsion de déblocage est provoquée automatiquement lorsqu'un blocage est détecté par le capteur (62).

4. Procédé selon l'une des revendications 1 à 3, **caractérisé en ce que** la face (54) de maintien est une face supérieure s'étendant au-dessus des cols (14) des préformes.

## Patentansprüche

1. Verfahren zum Deblockieren der Bewegung von Vorformlingen (10) aus thermoplastischem Material, die sich in einer Reihe in einem Förderer (19) für Anlagen zur Herstellung von Flaschen durch Formung der Vorformlinge befinden, wobei der Förderer Folgendes aufweist:
- eine Führungsbahn (33), in der jeder Vorformling eine frei hängende Position einnehmen soll; wobei die Führungsbahn (33) zwei feste parallele Schienen (46) aufweist, zwischen denen jeder Vorformling in seiner frei hängenden Position aufgenommen wird;
- Mittel zum kontinuierlichen Mitnehmen der Vorformlinge entlang der Führungsbahn (33) in einer Bewegungsrichtung, wobei die Mitnahmemittel durch mindestens ein Bürstenband (48) gebildet werden, das sich parallel zur Führungsbahn (33) bewegt und dessen Borsten (52) die Vorformlinge in Richtung der Bewegungsrichtung (F1) schieben;
- ein der Führungsbahn zugeordnetes komplementäres Element, das eine feste Fläche aufweist, die aus einer Haltefläche (54) gebildet ist, die gewährleistet, dass die Vorformlinge, die bereits ihre frei hängende Position in der Führungsbahn einnehmen, entlang eines stromabwärtigen Endabschnitts der Führungsbahn in dieser Position bleiben;
- wobei ein Vorformling eine Position einnehmen kann, in der er gegen die Haltefläche (54) eingeklemmt ist und somit ein erster eingeklemmter Vorformling ist, der die Blockierung der Bewegung der Vorformlinge, die sich hinter dem ersten eingeklemmten Vorformling sammeln, bewirkt;
**dadurch gekennzeichnet, dass** das Verfahren einen Deblockierungsschritt aufweist, der darin besteht, auf die Vorformlinge der blockierten Reihe einen Deblockierungsimpuls anzuwenden, der durch Umkehrung der Bewegungsrichtung der Bürstenbänder (48) erzeugt wird, um den ersten eingeklemmten Vorformling von der festen Fläche (54) wegzubewegen und zu ermöglichen, dass der erste eingeklemmte Vorformling in seine frei in der Führungsbahn (33) hängende Position kippen kann.

2. Verfahren zum Deblockieren der Bewegung von Vorformlingen (10) aus thermoplastischem Material, die sich in einer Reihe in einem Förderer (19) für Anlagen zur Herstellung von Flaschen durch Formung der Vorformlinge bewegen, wobei der Förderer Folgendes aufweist:
- eine Führungsbahn (33), in der jeder Vorformling eine frei hängende Position einnehmen soll, wobei die Führungsbahn (33) zwei feste parallele Schienen (46) aufweist, zwischen denen jeder Vorformling in seiner frei hängenden Position aufgenommen wird;
- Mittel zum kontinuierlichen Mitnehmen der Vorformlinge entlang der Führungsbahn (33) in einer Bewegungsrichtung, wobei die Mitnahmemittel durch Folgendes gebildet sind:
entweder durch passive Mittel durch die Tatsache, dass die Führungsbahn und die Schienen (46), die sie umfasst, geneigt sind, um zu ermöglichen, dass die Vorformlinge unter der Wirkung der Schwerkraft auf der Führungsbahn (33) nach unten gleiten, oder
durch eine zweite Rampe von Düsen zum Blasen von Druckluftstrahlen auf die Vorformlinge in Richtung der Bewegungsrichtung, wobei die Rampe parallel zur Führungsbahn ist;
- ein der Führungsbahn zugeordnetes komplementäres Element, das eine feste Fläche aufweist, die aus einer Haltefläche (54) gebildet ist, die gewährleistet, dass die Vorformlinge, die bereits ihre frei hängende Position in der Führungsbahn einnehmen, entlang eines stromabwärtigen Endabschnitts der Führungsbahn in dieser Position bleiben;
- wobei ein Vorformling eine Position einnehmen kann, in der er gegen die Haltefläche (54) geklemmt ist und somit ein erster eingeklemmter Vorformling ist, der die Blockierung der Bewegung der Vorformlinge, die sich hinter dem ersten eingeklemmten Vorformling sammeln, bewirkt; und
wobei das Verfahren einen Deblockierungsschritt aufweist, der darin besteht, auf die Vorformlinge der blockierten Reihe einen Deblockierungsimpuls anzuwenden, der durch Blasen von Druckluftstrahlen (60) auf einen Teil der Vorformlinge entgegen der Bewegungsrichtung (F1) der Vorformlinge mit Hilfe einer zur Führungsbahn (33) parallelen ersten Rampe (56) von Blasdüsen erzeugt wird, um zu ermöglichen, dass der erste eingeklemmte Vorformling in seine frei in der Führungsbahn (33) hängende Position kippen kann.

3. Verfahren nach einem der Ansprüche 1 oder 2, **dadurch gekennzeichnet, dass** es einen vorausgehenden Schritt der Erfassung der Blockierung der Bewegung der Vorformlinge mit Hilfe eines Sensors (62) für den Durchgang der Vorformlinge umfasst und dass der Deblockierungsimpuls automatisch erzeugt wird, wenn eine Blockierung durch den Sensor (62) erfasst wird.

4. Verfahren nach einem der Ansprüche 1 bis 3, **dadurch gekennzeichnet, dass** die Haltefläche (54) eine obere Fläche ist, die sich über den Hälsen (14) der Vorformlinge erstreckt.

## Claims

1. Method for unblocking the movement of thermoplastic preforms (10) travelling in single file in a conveyor (19) for installations for manufacturing bottles by forming said preforms, said conveyor comprising:
- a guide chute (33) in which each preform is intended to occupy a freely suspended position; the chute (33) comprising two parallel fixed rails (46) between which each preform is received in its freely suspended position;
- drive means for continuously driving the preforms along the chute (33) in a direction of travel, said drive means being formed by at least one belt (48) of brushes traveling parallel to the chute (33) and the bristles (52) of which push the preforms in the direction (F1) of travel;
- a complementary member associated with the chute, comprising a fixed face consisting of a maintaining face (54) ensuring that preforms already occupying their freely suspended position in the chute remain in this position all along a downstream end portion of the chute;
- a preform being liable to occupy a position in which it finds itself wedged against the maintaining face (54) and of thus being a first wedged preform, blocking the travel of the preforms that accumulate behind the first wedged preform;
**characterized in that** the method comprises an unblocking step which consists in applying to the preforms of the blocked file an unblocking impulse that is achieved by reversing the direction of travel of the belts (48) of brushes in order to move the first blocked preform away from the fixed face (54) and allow said first blocked preform to tilt into its position of being freely suspended in the chute (33).

2. Method for unblocking the movement of thermoplastic preforms (10) travelling in single file in a conveyor (19) for installations for manufacturing bottles by forming said preforms, said conveyor comprising:
- a guide chute (33) in which each preform is intended to occupy a freely suspended position; the chute (33) comprising two parallel fixed rails (46) between which each preform is received in its freely suspended position;
- drive means for continuously driving the preforms along the chute (33) in a direction of travel, said drive means being formed:
either by passive means, through the fact that the chute and the rails (46) that it comprises are inclined so as to allow the preforms to slide toward the bottom of the chute (33) under the effect of gravity,
or by a second line of blowing nozzles blowing jets of compressed air onto the preforms in the direction of travel, the line being parallel to the chute;
- a complementary member associated with the chute, comprising a fixed face consisting of a maintaining face (54) ensuring that preforms already occupying their freely suspended position in the chute remain in this position all along a downstream end portion of the chute;
- a preform being liable to occupy a position in which it finds itself wedged against the maintaining face (54) and of thus being a first wedged preform, blocking the travel of the preforms that accumulate behind the first wedged preform;
and wherein the method comprises an unblocking step which consists in applying to the preforms of the blocked file an unblocking impulse that is achieved by blowing jets (60) of compressed air onto a part of the preforms counter to the direction (F1) of travel of the preforms by means of a first line (56) of blowing nozzles parallel to the chute (33) so as to allow said first blocked preform to tilt into its position of being freely suspended in the chute (33) .

3. Method according to one of Claims 1 or 2, **characterized in that** it comprises a prior step of detecting the blocking of the movement of the preforms, by means of a sensor (62) sensing the passing of the preforms, and **in that** the unblocking impulse is brought about automatically when a blockage is detected by the sensor (62).

4. Method according to one of Claims 1 to 3, **characterized in that** the maintaining face (54) is an upper face extending above the necks (14) of the preforms.
